# EUROPÄISCHE PATENTSCHRIFT

(11) **EP 3 123 035 B1**
(45) Veröffentlichungstag und Bekanntmachung des Hinweises auf die Patenterteilung: **14.11.2018**
(21) Anmeldenummer: 15709188.5
(22) Anmeldetag: 11.03.2015
(51) Int. Cl.: F16B 25/00

(54) **SCHRAUBE**
SCREW
VIS

(30) Priorität: 24.03.2014 DE 102014205464
(43) Veröffentlichungstag der Anmeldung: 01.02.2017
(73) Patentinhaber: Schmid Schrauben Hainfeld Gesellschaft m.b.H., 3170 Hainfeld (AT)
(72) Erfinder: LEB, Gerhard, 3204 Kirchberg (AT)
(74) Vertreter: Patentanwälte Ruff, Wilhelm, Beier, Dauster & Partner mbB
(86) Internationale Anmeldenummer: PCT/EP2015/055115
(87) Internationale Veröffentlichungsnummer: WO 2015/144441

(56) Entgegenhaltungen:
- DE-U1- 29 824 767
- DE-U1-202009 016 518
- DE-U1-202010 004 415
- TW-U- M 456 420
- US-A- 2 263 137

## Beschreibung

Die Erfindung betrifft eine Schraube mit einem Schraubengewinde und in Axialrichtung verlaufenden rippenartigen Vorsprüngen.

Es ist bereits eine Spanplattenschraube bekannt, die an ihrem vorderen, dem Schraubenantriebsende abgewandten Schaftende einen Kegelabschnitt aufweist, der in einer Schraubenspitze ausläuft. An diesem Ende des Schafts ist eine Vielzahl von axialen Schaberippen mit einem dreieckigen Querschnitt, dessen Vorderkante abgeflacht ist, vorhanden. Die Schaberippen enden an dem Ende des zylindrischen Schafts (DE 10 2011 002 962 A1).

Bei einer ähnlichen Schraube zur Verwendung bei aus Holz hergestellten Bauteilen ist ebenfalls im Bereich des Endes des zylindrischen Schafts eine Vielzahl von dreieckigen Rippen mit scharfen oder abgerundeten Kanten vorhanden, die keinen Zwischenraum zwischen einander bilden (EP 1 411 252 A2).

Weiterhin bekannt ist eine selbstschneidende Kopfschraube (EP 0 705 987 B1) mit sich über das gesamte Gewinde erstreckenden Längsrippen mit einem rechteckigen Querschnitt.

Der Erfindung liegt die Aufgabe zu Grunde, eine Schraube zu schaffen, die sich schnell eindrehen lässt und in Randbereich eine nur geringe Sprengwirkung aufweist.

Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die Schraube nach der Erfindung enthält also im Bereich ihres vorderen Endes mindestens zwei Rippen, die noch im Bereich des zylindrischen Schafts beginnen und sich in den Kegelabschnitt hinein erstrecken, und zwar bis kurz vor die Schraubenspitze. Damit wird dafür gesorgt, dass die Rippen das Eingreifen der Schraube in das Material und den Beginn des Einschraubens nicht behindern. Sie wirken also erst nach dem Beginn des Einschraubvorgangs.

Es ist sinnvoll, dass in Weiterbildung die beiden in Axialrichtung verlaufenden Rippen einander diametral gegenüberliegen, also um den Umfang herum gleichmäßig verteilt sind.

In Weiterbildung der Erfindung kann vorgesehen sein, dass sich die Rippen innerhalb des zylindrischen Schafts über etwa eine Gewindewindung bis zu drei Gewindewindungen erstrecken.
Nach einem weiteren Merkmal der Erfindung kann vorgesehen sein, dass die Höhe der Rippen, also ihre radiale Erstreckung gegenüber der Oberfläche des Schafts der Schraube zwischen den Windungen, kleiner ist als die Höhe der Gewindewindungen selbst. Beispielsweise kann die Höhe der Rippen etwa halb so groß sein wie die Gewindehöhe. Die Wirkung des Gewindes wird also durch die Rippen nicht gestört.
In weiterer Ausgestaltung der Erfindung kann vorgesehen sein, dass die Höhe der Rippen untereinander gleich ist, dass also alle Rippen die gleiche Höhe aufweisen.
Es ist jedoch ebenfalls möglich und liegt im Rahmen der Erfindung, dass die Rippen unterschiedliche Höhe aufweisen. Beispielsweise kann vorgesehen sein, dass die Rippen paarweise die gleiche Höhe aufweisen.

Während die Schaberippen im Stand der Technik üblicherweise an ihrer Außenseite eine oder zwei Kanten aufweisen, sieht die Erfindung vor, dass die Rippen eine abgerundete Außenkante aufweisen.
Es kann vorgesehen sein, dass die Rippen zwei ebene Seitenflanken aufweisen. Diese Seitenflanken können parallel verlaufen. Es hat sich jedoch als vorteilhaft herausgestellt, wenn die Seitenflanken der Rippen einen spitzen Winkel miteinander einschließen.
In weiterer Ausgestaltung der Erfindung schlägt diese vor, dass die Schraube eine geradzahligen Anzahl von Rippen aufweist, insbesondere vier Rippen. Die Rippen sind gleichmäßig über den Umfang verteilt angeordnet, wobei bei vier Rippen diese um jeweils 90° versetzt angeordnet sind.
Bei der Schraube kann es sich um eine Schraube mit einem Schraubenkopf an dem Antriebsende handeln. Insbesondere ist das Antriebsende derart ausgestaltet, dass sich die Schraube vollständig versenken lässt.

Es kann vorgesehen sein, dass das Antriebsende zylindrisch ausgebildet ist und einen Durchmesser aufweist, der größer als der Kerndurchmesser des auf den Schaft aufgewalzten Gewindes ist. Insbesondere kann der Durchmesser des Antriebsendes kleiner als der Außendurchmesser des Gewindes sein.
In weiterer Ausgestaltung der Erfindung kann vorgesehen sein, dass die Schraube im Bereich des Schraubenantriebsendes mindestens zwei in Axialrichtung der Schraube verlaufende Kopfrippen aufweist.
Die Merkmale, die im Vorstehenden für die im Spitzenbereich der Schraube angeordneten Rippen erläutert wurden, können in weiterer Ausgestaltung der Erfindung auch bei den Kopfrippen vorhanden sein.
In Weiterbildung der Erfindung kann vorgesehen sein, dass die Kopfrippen in Umfangsrichtung gesehen mittig zwischen den im Spitzenbereich der Schraube angeordneten Rippen angeordnet sind.

Weitere Merkmale, Einzelheiten und Vorteile der Erfindung ergeben sich aus der folgenden Beschreibung bevorzugter Ausführungsformen der Erfindung sowie anhand der Zeichnung. Hierbei zeigen:
- Figur 1: eine Seitenansicht einer Schraube nach der Erfindung;
- Figur 2: einen vergrößerten Ausschnitt der Schraube der Figur 1;
- Figur 3: einen Querschnitt durch die Schraube längs Linie III-III in Figur 2;
- Figur 4: einen vergrößerten Ausschnitt des Spitzenbereichs der Schraube der Figur 1;
- Figur 5: einen vergrößerten Ausschnitt aus dem Querschnitt der Figur 3;
- Figur 6: einen der Figur 3 entsprechenden Querschnitt bei einer zweiten Ausführungsform;
- Figur 7: eine perspektivische Teilansicht der Schraube im Bereich der Kopfrippen;
- Figur 8: eine perspektivische Teilansicht der Schraube im Bereich der Schraubenspitze.

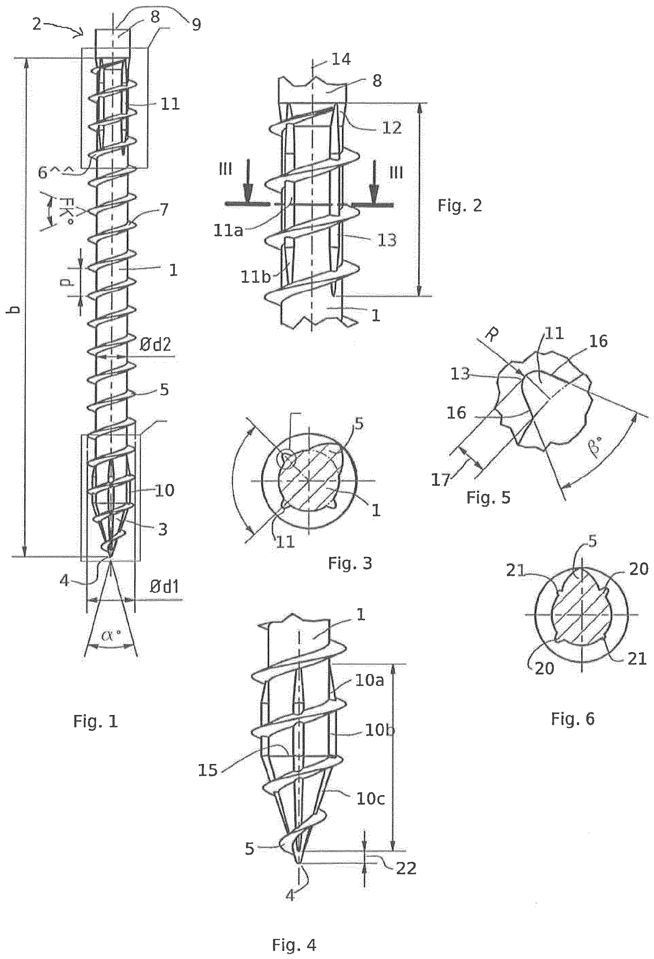

Die Figur 1 zeigt in einer Seitenansicht eine vollständige Schraube mit den Merkmalen der Erfindung. Die Schraube enthält einen Schraubenschaft 1, der an seinem einen, in Figur 1 oberen Ende als Schraubenantriebsende 2 ausgebildet ist. An dem gegenüberliegenden Ende des Schraubenschafts 1 ist ein Kegelabschnitt 3 ausgebildet, in dem sich der Querschnitt der Schraube kontinuierlich verringert, bis die Schraube in einer Schraubenspitze 4 ausläuft. Der Kegelabschnitt 3 weist einen Kegelwinkel Alpha von etwa 20° bis 30° auf.

Der Schraubenschaft 1 ist bis zu dem Übergang in den Kegelabschnitt 3 zylindrisch.

Über den Schraubenschaft 1 und den Kegelabschnitt 3 erstreckt sich ein Schraubengewinde 5, das im dargestellten Beispiel ein Einganggewinde ist. Das Schraubengewinde 5 wird von zwei Gewindeflanken 6, 7 gebildet, die zwischen einander einen Flankenwinkel FK einschließen. Das Schraubengewinde 5 setzt sich bis zu der Schraubenspitze 4 fort.

Das Schraubenantriebsende 2 ist als zylindrischer Abschnitt 8 ausgebildet, dessen Außendurchmesser etwas größer ist als der Durchmesser d2 des Schraubenschafts, aber kleiner als der Außendurchmesser d1 des Schraubengewindes 5.

In der Stirnfläche 9 des Schraubenantriebsendes 2 ist eine Schraubenantriebsvertiefung ausgebildet, in die ein Werkzeug eingesetzt werden kann, mit dessen Hilfe die Schraube geschraubt werden kann.

Im Bereich des dem Schraubenantriebsende 2 entgegengesetzten Endes der Schraube weist diese vier Rippen 10 auf, die vom Schraubenantriebsende 2 ausgehend in einem Abstand von etwa dem doppelten der Steigung p des Schraubengewindes 5 vor dem Ende des zylindrischen Schraubenschafts 1 beginnen. Sie erstrecken sich dann auch in den Kegelabschnitt 3 der Schraube und reichen bis fast zu der Schraubenspitze 4, haben von dieser aber noch einen Abstand. Die Rippen 10 verlaufen in Axialrichtung der Schraube. Sie sind gleichmäßig über den Umfang der Schraube verteilt.

An dem der Schraubenspitze 4 gegenüberliegenden Ende der Schraube, in Figur 1 oben, sind ebenfalls Rippen angeordnet, die in Axialrichtung der Schraube verlaufen und unmittelbar unterhalb des zylindrischen Abschnitts 8 des Schraubenantriebsendes 2 beginnen. Sie erstrecken sich über etwa drei Windungen des Schraubengewindes 5. Zur Unterscheidung der im Spitzenbereich der Schraube angeordneten Rippen 10 werden die im Bereich des Schraubenkopfs der Schraube angeordneten Rippen Kopfrippen 11 genannt. Es sind ebenfalls vier Kopfrippen 11 vorhanden, die wiederum gleichmäßig über den Umfang der Schraube verteilt angeordnet sind, so dass benachbarte Kopfrippen 11 einen Winkel von 90° miteinander einschließen.

Wie man der Figur 1 entnehmen kann, sind die Kopfrippen 11 um einen Winkel von 45° gegenüber den Rippen 10 versetzt, oder anders ausgedrückt, verlaufen die Kopfrippen 11 in Umfangsrichtung mittig zwischen den Rippen 10.

Einzelheiten der in Figur 1 dargestellten Schraube werden anhand der folgenden Figuren erläutert.

Die Figur 2 zeigt einen vergrößerten Ausschnitt der Figur 1. Da der zylindrische Abschnitt 8 des Schraubenantriebsendes 2 einen größeren Durchmesser aufweist als der Kerndurchmesser d2 des Schafts 1, wird im Übergang zwischen dem genannten Abschnitt 8 und dem Schaft 1 ein kegelförmiger Übergangsabschnitt 12 gebildet, innerhalb dessen die Kopfrippen 11 beginnen. Die abgerundete Außenkante 13 der Kopfrippen 12 weist von der Längsachse 14 der Schraube etwa den gleichen Abstand auf wie die Oberfläche des zylindrischen Abschnitts 8. Die Außenkante 13 steigt von dem Anfang der Kopfrippen 11 zunächst geringfügig an, bis sie im mittleren Abschnitt 11a parallel zur Achse 14 verläuft. An ihrem Ende verringert sich der Abstand bzw. die Höhe der Kopfrippen 11 wieder, so dass hier ein in Seitenansicht keilförmiger Abschnitt 11 b gebildet wird. Die Kopfrippen 11 gehen also im Bereich ihrer beiden Enden ohne Bildung einer Stirnfläche in den Schaft 1 bzw. den zylindrischen Abschnitt 8 über.

Ähnlich wie die Kopfrippen 11 sind auch die Rippen 10 im Bereich der Schraubenspitze 4 ausgebildet. Es wird jetzt auf die Figur 4 Bezug genommen. Die Rippen 10 beginnen in einem Abstand von dem Ende 15 des zylindrischen Schafts 1, der etwa dem doppelten der Steigung entspricht. Die Rippen 10 bilden hier einen ersten in der Seitenansicht keilförmigen Bereich 10 a, innerhalb dessen die Höhe der Rippe 10 vom Wert Null auf den Endwert ansteigt. An diesen keilförmigen Abschnitt 10a schließt sich dann der mittlere Bereich 10b der Rippen 10 an, in dem die Rippen 10 eine konstante Höhe aufweisen. Dieser Bereich 10b konstanter Höhe der Rippen 10 endet an dem Ende 15 des zylindrischen Schafts 1. Von da an verringert sich die Höhe der Rippen 10 in dem zur Spitze hin gerichteten Abschnitt 10c der Rippen 10 kontinuierlich. Auch dieser Abschnitt 10c der Rippen 10 ist damit keilförmig. Der keilförmige Abschnitt 10c ist länger als der keilförmige Abschnitt 10a, bei der dargestellten Ausführungsform etwa doppelt so lang.

Die Rippen 10 enden mit einem Abstand 22 von der Schraubenspitze 4. Der Abstand 22 beträgt deutlich weniger als die Steigung des Gewindes, bei der dargestellten Ausführungsform etwa ein Viertel bis ein Fünftel der Steigung. Das Gewinde 5 reicht bis näher an die Schraubenspitze 4 als die Rippen 10.

Die Figur 3, auf die jetzt Bezug genommen wird, zeigt einen Schnitt längs der Linie III-III in Figur 2, also durch den Schraubenschaft in Höhe des Ausschnitts im Bereich des Antriebsendes 2 der Schraube. Er könnte aber auch durch den Spitzenbereich gelegt sein, da die Rippen 10 und die Kopfrippen 11 in ihrem mittleren Bereich konstanter Höhe identisch ausgebildet sind. Man kann dem Schnitt der Figur 3 also entnehmen, dass der Winkelabstand zwischen benachbarten Rippen 10 bzw. 11, gemessen an der größten Radialerstreckung der Rippen 10 bzw. 11, 90° beträgt. Von den vier vorhandenen Kopfrippen 11 sind in dem Schnitt der Figur 3 nur drei zu sehen, da die vierte durch die Gewindewindung 5 verdeckt ist, die an dieser Stelle durch die Schnittebene führt.

Die Figur 5 zeigt einen vergrößerten Ausschnitt aus Figur 3, und zwar durch eine Kopfrippe 11. Die Kopfrippe 11 wird von zwei Seitenflanken 16 begrenzt, die jeweils als ebene Fläche ausgebildet sind und die unter einem spitzen Winkel von beispielsweise 30° angeordnet sind. Die beiden Seitenflanken 16 werden durch eine Abrundung mit dem Radius R miteinander verbunden, so dass eine abgerundete Kante 13 entsteht. Die Höhe 17 der Kopfrippen 11 entspricht, wie man auch aus Figur 3 entnehmen kann, etwa der Hälfte der Gewindehöhe.

Bei der bisher behandelten Ausführungsform, die unter Bezugnahme auf die Figuren 1 bis 5 beschrieben und erläutert wurde, haben alle Rippen 10 untereinander und alle Kopfrippen 11 untereinander die gleiche Höhe. Die Darstellung der Fig. 5 gilt somit auch für die Rippen 10 im Bereich der Schraubenspitze 4. Es ist aber ebenfalls möglich, und dies soll die Figur 6 erläutern, dass von den vier Rippen je zwei einander gegenüberliegende Rippen 20 die gleiche Höhe aufweisen, während die zwischen ihnen angeordneten Rippen 21 zwar untereinander auch die gleiche Höhe aufweisen, die aber von der Höhe der Rippen 20 verschieden ist. Hier haben also die Rippen paarweise die gleiche Höhe.

Die Kopfrippen 11 und die Rippen 10 können ebenfalls untereinander die gleiche, aber auch verschiedene Höhen aufweisen.

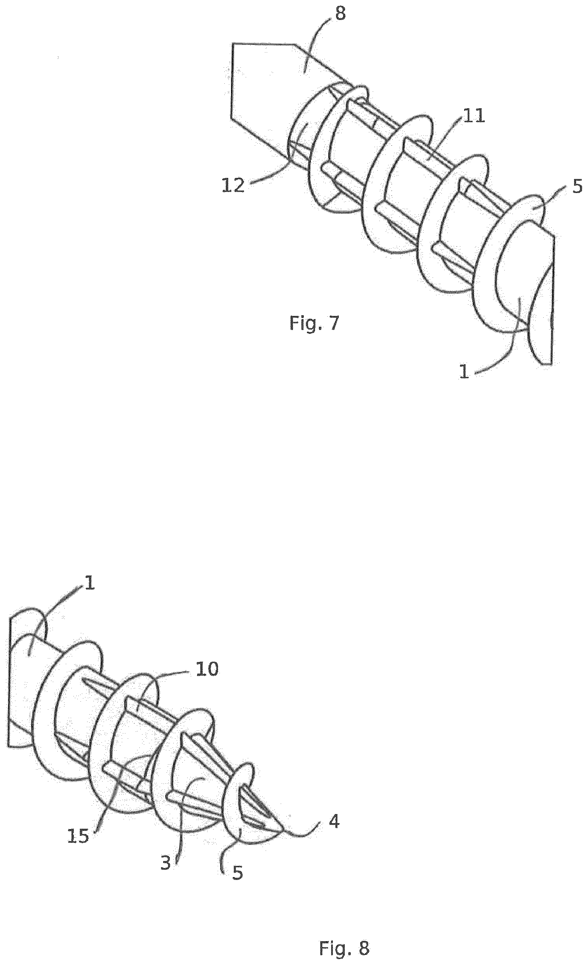

Die Figur 7 zeigt perspektivisch den in Figur 2 in Ansicht dargestellten Ausschnitt aus der Schraube mit den Kopfrippen 11, die sich von dem zylindrischen Kopfabschnitt 8 ausgehend den Schraubenschaft 1 entlang axial erstrecken.

Entsprechend zeigt die Figur 8 den in Figur 1 in Seitenansicht dargestellten Ausschnitt aus der Schraube mit den vorderen Rippen 10, die sich bis in den Kegelabschnitt 3 hinein erstrecken und vor der Schraubenspitze 4 enden. Hier ist auch zu sehen, dass das Gewinde 5 bis zu der Schraubenspitze 4 ausgebildet ist. Die Rippen 10 werden also erst dann wirksam, wenn das Gewinde 5 bereits in dem Holz, in das die Schraube geschraubt wird, eingegriffen hat.

### Ausführungsbeispiel:

Bei einer Schraube mit einem Schraubendurchmesser von 6.0 mm beträgt der Abstand 22 zwischen dem vorderen Ende der Rippen 10 und der Schraubenspitze 4 zwischen 0,5 und 1,5 mm. Der Winkel beta beträgt zwischen 45° und 65°. Die Höhe 17 der Rippen 11 bzw. 10 liegt zwischen 0,1 und 0,6 mm. Die Verrundung R zwischen den Seitenflanken 16 der Rippen 10 bzw. 11 liegt zwischen 0,2 und 0,5 mm. Die Länge der Rippen 10 bzw. 11 beträgt etwa 12 mm. Der Flankenwinkel FK beträgt 40°. Die Steigung p beträgt 3.6 mm. Der Winkel an der Schraubenspitze beträgt 30°.

## Patentansprüche

1. Schraube, mit
- einem zylindrischen Schraubenschaft (1),
- dessen eines Ende als Schraubenantriebsende (2) ausgebildet ist und
- an dessen anderem Ende ein Kegelabschnitt (3) ausgebildet ist, der
- in eine Schraubenspitze (4) ausläuft,
- einem sich über mindestens einen Teil des Schraubenschafts (1) und des Kegelabschnitts (3) erstreckenden Gewinde (5), sowie mit
- mindestens zwei in Axialrichtung der Schraube verlaufenden Rippen (10), die
- im Bereich des vorderen Endes des Schafts (10) beginnen,
- bis in den Kegelabschnitt (3) hinein reichen und
- vor der Schraubenspitze (4) enden, wobei
- die Rippen einen mittleren Bereich (10b) konstanter Höhe und im Bereich ihrer beiden Enden je einen keilförmigen Abschnitt (10a, 10c) mit einer sich verringernden Höhe und eine abgerundete Außenkante (13) aufweisen.

2. Schraube nach Anspruch 1, bei der sich die Rippen (10) innerhalb des Schafts (1) über ein bis drei Gewindegänge des Gewindes (5) erstrecken.

3. Schraube nach Anspruch 1 oder 2, bei der die Höhe (17) der Rippen (10) kleiner als die Gewindehöhe ist, vorzugsweise etwa halb so groß wie die Gewindehöhe.

4. Schraube nach einem der vorhergehenden Ansprüche, bei der die Höhe (17) der Rippen (10) untereinander gleich ist.

5. Schraube nach einem der Ansprüche 1 bis 3, bei der die Rippen (10) unterschiedliche Höhe (17) aufweisen.

6. Schraube nach einem der vorhergehenden Ansprüche, bei der die Rippen (10) von zwei ebenen Flanken (16) begrenzt sind.

7. Schraube nach einem der vorhergehenden Ansprüche, bei der die Seitenflanken (16) einen spitzen Winkel (β) miteinander einschließen.

8. Schraube nach einem der vorhergehenden Ansprüche, mit einer geradzahligen Anzahl von Rippen (10), insbesondere mit vier Rippen (10).

9. Schraube nach einem der vorhergehenden Ansprüche, bei der das Antriebsende (2) der Schraube als zur Versenkung geeignet ausgebildet ist.

10. Schraube nach einem der vorhergehenden Ansprüche, bei der das Antriebsende (2) zylindrisch mit einem Durchmesser ausgebildet ist, der größer als der Kerndurchmesser (d2) und kleiner als der Gewindeaußendurchmesser des Gewindes (5) ist.

11. Schraube nach einem der vorhergehenden Ansprüche, mit mindestens zwei im Bereich des Schraubenantriebsendes (2) beginnenden in Axialrichtung der Schraube verlaufenden Kopfrippen (11).

12. Schraube nach Anspruch 11, bei der die Kopfrippen (11) eine den im Spitzenbereich der Schraube angeordneten Rippen (10) ähnliche Ausbildung aufweisen.

13. Schraube nach Anspruch 11 oder 12, bei der die Kopfrippen (11) in Umfangsrichtung gesehen mittig zwischen den im Spitzenbereich der Schraube angeordneten Rippen (10) angeordnet sind.

## Claims

1. Screw, having
- a cylindrical screw shaft (1),
- one end thereof configured as a screw driving end (2) and
- the other end thereof provided with a conical section (3),
- said conical section tapering off in a screw tip (4),
- a thread (5) extending across at least a part of the screw shaft (1) and the conical section (3), and having
- at least two fins (10) extending in the axial direction of the screw,
- said fins starting in the region of the front end of the shaft (10),
- reaching up into the conical section (3) and
- ending before the screw tip (4), wherein
- the fins present a central portion (10b) of constant height and, in the region of both of their ends, in each case one wedge-shaped section (10a, 10c) of decreasing height and a rounded outer edge (13).

2. Screw according to claim 1, wherein the fins (10) within the shaft (1) extend across one to three thread turns of the thread (5).

3. Screw according to claim 1 or 2, wherein the height (17) of the fins (10) is smaller than the thread height, preferably is approximately half the size of the thread height.

4. Screw according to any one of the preceding claims, wherein the height (17) of the fins (10) is equal among each other.

5. Screw according to any one of claims 1 to 3, wherein the fins (10) differ in their heights (17).

6. Screw according to any one of the preceding claims, wherein the fins (10) are limited by two plane flanks (16).

7. Screw according to any one of the preceding claims, wherein the lateral flanks (16) enclose an acute angle (β) between them.

8. Screw according to any one of the preceding claims, including an even number of fins (10), in particular including four fins (10).

9. Screw according to any one of the preceding claims, wherein the driving end (2) of the screw is configured for countersinking.

10. Screw according to any one of the preceding claims, wherein the driving end (2) is cylindrical with a diameter that is greater than the core diameter (d2) and smaller than the thread outer diameter of the thread (5).

11. Screw according to any one of the preceding claims, having at least two head fins (11) starting in the region of the screw driving end (2) and extending in the axial direction of the screw.

12. Screw according to claim 11, wherein the head fins (11) present a configuration similar to the fins (10) disposed in the tip region of the screw.

13. Screw according to claim 11 or 12, wherein the head fins (11), as seen in the circumferential direction, are disposed centrally between the fins (10) located in the tip region of the screw.

## Revendications

1. Vis, comprenant
- une queue de vis (1) cylindrique,
- dont une extrémité est réalisée sous la forme d'une extrémité d'entraînement de vis (2) et
- à l'autre extrémité de laquelle est formée une portion conique (3), laquelle
- s'étire en une pointe de vis (4),
- un filet (5) qui s'étend sur au moins une partie de la queue de vis (1) et de la portion conique (3), et comprenant aussi
- au moins deux nervures (10) qui s'étendent dans la direction axiale de la vis, lesquelles
- commencent dans la zone de l'extrémité avant de la queue (10),
- se prolongent jusqu'à l'intérieur de la portion conique (3) et
- se terminent avant la pointe de vis (4),
- les nervures possédant une zone centrale (10b) de hauteur constante et, dans la zone de leurs deux extrémités, respectivement une portion cunéiforme (10a, 10c) avec une hauteur qui se réduit et un bord extérieur (13) arrondi.

2. Vis selon la revendication 1, avec laquelle les nervures (10) s'étendent à l'intérieur de la queue (1) sur un à trois pas de vis du filet (5).

3. Vis selon la revendication 1 ou 2, avec laquelle la hauteur (17) des nervures (10) est inférieure à la hauteur du filet, de préférence approximativement égale à la moitié de la hauteur du filet.

4. Vis selon l'une des revendications précédentes, avec laquelle la hauteur (17) des nervures (10) est identique entre elles.

5. Vis selon l'une des revendications 1 à 3, avec laquelle les nervures (10) possèdent des hauteurs (17) différentes.

6. Vis selon l'une des revendications précédentes, avec laquelle les nervures (10) sont délimitées par deux flancs (16) plans.

7. Vis selon l'une des revendications précédentes, avec laquelle les flancs latéraux (16) incluent entre eux un angle aigu (β).

8. Vis selon l'une des revendications précédentes, comprenant un nombre pair de nervures (10), comprenant notamment quatre nervures (10).

9. Vis selon l'une des revendications précédentes, avec laquelle l'extrémité d'entraînement (2) de la vis est configurée de façon adaptée à un montage à tête noyée.

10. Vis selon l'une des revendications précédentes, avec laquelle l'extrémité d'entraînement (2) est configurée de façon cylindrique avec un diamètre qui est supérieur au diamètre de l'âme (d2) et inférieur au diamètre extérieur du filet (5).

11. Vis selon l'une des revendications précédentes, comprenant au moins deux nervures de tête (11) qui commencent dans la zone de l'extrémité d'entraînement de vis (2) et s'étendent dans le sens axial de la vis.

12. Vis selon la revendication 11, avec laquelle les nervures de tête (11) possèdent une configuration similaire à celle des nervures (10) disposées dans la zone de la pointe de la vis.

13. Vis selon la revendication 11 ou 12, avec laquelle les nervures de tête (11), vues dans le sens circonférentiel, sont disposées au centre entre les nervures (10) disposées dans la zone de la pointe de la vis.
